Europäisches Patentamt

European Patent Office

Office européen des brevets

(19)

(11) Publication number: **0 150 889**
**B1**

## EUROPEAN PATENT SPECIFICATION

(12)

(45) Date of publication of patent specification: **01.02.89**

(51) Int. Cl.⁴: **B 65 G 15/50,** B 65 G 15/14, B 65 B 7/28

(21) Application number: **85200099.1**

(22) Date of filing: **31.01.85**

(54) **Device for handling ends for tins.**

(30) Priority: **31.01.84 NL 8400294**

(43) Date of publication of application: **07.08.85 Bulletin 85/32**

(45) Publication of the grant of the patent: **01.02.89 Bulletin 89/05**

(84) Designated Contracting States: **DE GB IT NL**

(56) References cited:
GB-A-2 010 771
US-A-3 350 842
US-A-4 164 996
US-A-4 390 135

(73) Proprietor: **Thomassen & Drijver-Verblifa N.V. Zutphenseweg 51 P.O. Box 103 NL-7400 GB Deventer (NL)**

(72) Inventor: **Ter Horst, Gerrit Harmen Freek Prinses Ireneweg 27 NL-7433 DD Schalkhaar (NL)**
Inventor: **Vrind, Hendrik Christoffel Vestdijkgaarde 16 NL-7414 VM Deventer (NL)**
Inventor: **Kempers, Johannus Cornelis Slangenburg 613 NL-7423 ZP Deventer (NL)**

(74) Representative: **Konings, Lucien Marie Cornelis Joseph et al OCTROOIBUREAU ARNOLD & SIEDSMA Sweelinckplein 1 NL-2517 GK Den Haag (NL)**

Courier Press, Leamington Spa, England.

## Description

The invention relates to a device as defined in the heading of claim 1.

Such a device is known from US—A—4390135. With this prior art device the packed stacks are laid in the unpacking space. The packing is probably cut by hand in longitudinal direction at its top. After the stack has been automatically peeled the stack of ends is removed from the unpacking space, probably also by hand.

The aim of the invention is to provide a simple, short, automatic device. The device according to the invention is defined in claim 1. Dependent claims 2 to 9 concern particular embodiments of the invention.

It is noted that an automatic method and device for unpacking stacks of ends is disclosed in GB 2 010 771, wherein each time a packed stack of ends:

is axially supplied on a conveying belt;

is transversely transversed from the belt into a cutting space;

and is transferred in axial direction from the cutting space into a peeling space;

and wherein the unpacked stack is transferred transversely from the storage space into a delivery space;

and in which this stack is finally axially delivered from the delivery space.

This expensive device is constructed as a compact embodiment.

Further features concerning further developments of the device according to the invention are described in the dependent claims.

The invention will now be described in more detail with reference to the accompanying drawings. The drawings show in:

Fig. 1 a cross-sectional view of a stack supply device of a further device embodying the invention,

Fig. 2 on an enlarged scale the stack unpacking device of Fig. 1,

Figs. 3 to 5 and 7 to 10 fragmentary longitudinal views of a stack supply device to be arranged at the inlet end of the transport device embodying the invention in consecutive operational positions,

Fig. 6 is a cross-sectional view of the stack unpacking device of Fig. 1 to be arranged at the input end of the transport device embodying the invention,

Fig. 11 is a fragmentary side elevation of an inlet end of a further transport device embodying the invention, with which the stack supply device of Figs. 1 to 10 can be connected,

Figs. 12 and 13 schematic sectional views taken on respectively the lines XII—XII and XIII—XIII in Fig. 11 and

Fig. 14 a preferred variant of the sectional view of Fig. 12 on an enlarged scale.

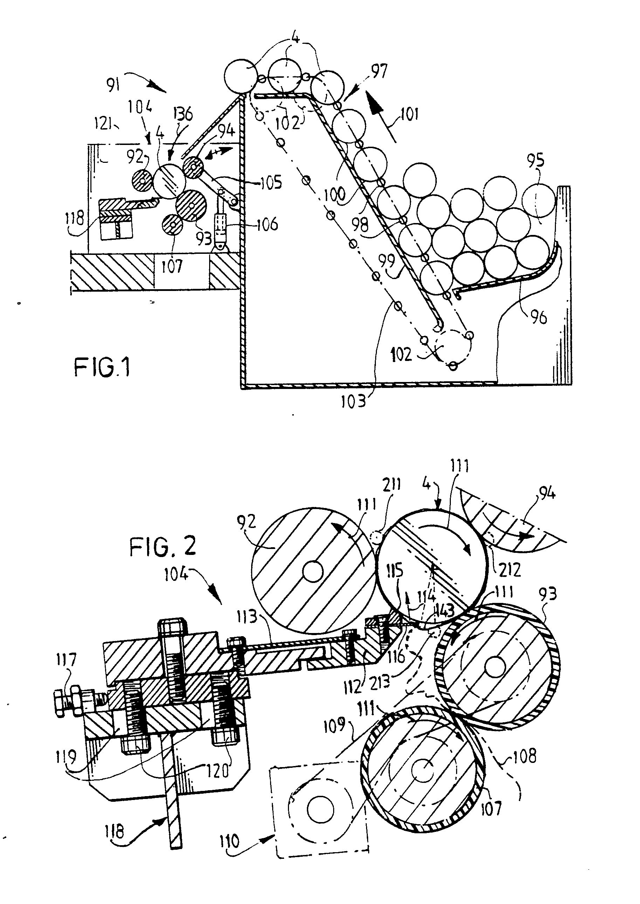

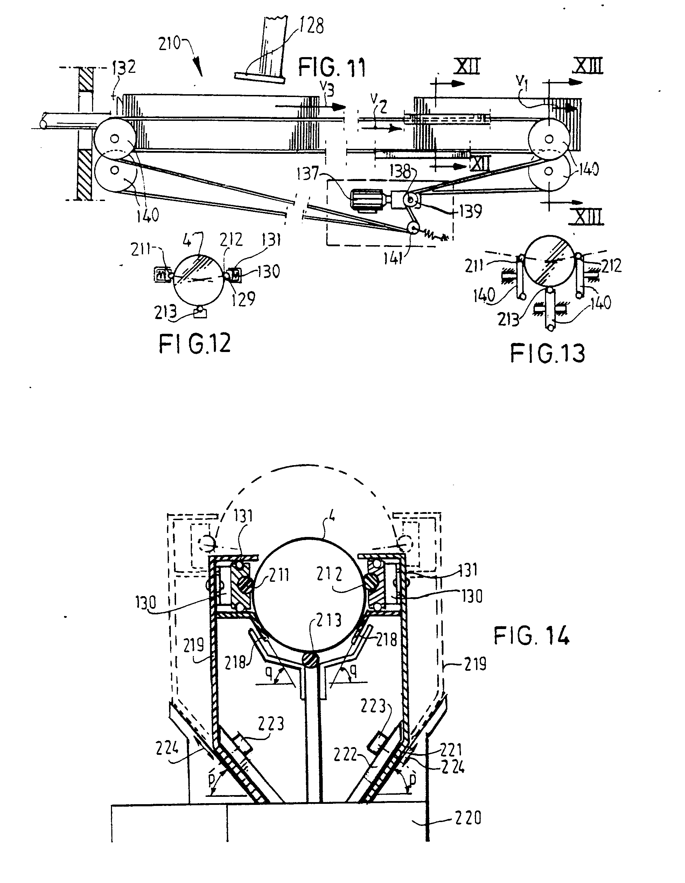

The stack supply device 91 of Figs. 1 to 10 comprises three rollers 92, 93 and 94 forming guide means for a stack 4 of ends 3 and extending mainly in the axial direction of the set of ropes 211, 212, 213 of the front end of the transport device 210 of Figs. 11 to 14. The stack supply device 91 has a stack holder 95 for stacks 4 of ends 3 packed in sheets, for example, of paper a bottom of which slopes downwards to a chain conveyor 97 constituting first transport means bounding the stack holder and having chains 103 passed around sprockets 102 and having transverse bars 98 and a guide plate 99.

Between the transverse bars 98 there are stack receiving spaces 100 so that when the chain conveyor 97 is driven in the direction of the arrow 101 a stack 4 of ends 3 is received in each space 100 and then supplied rolling along the guide plate 99 to an unpacking device 104, which comprises three rollers 92, 93 and 94. The roller 93 co-operates with a roller 107 as a pair for conducting away a sheet 108. The rubber-coated rollers 107 and 93 are driven by a motor 110 via a chain drive 109 so that the rollers 93 and 107 and also the rollers 92 and 94 indirectly driven via the stack 4 rotate in the direction indicated by arrows 111.

The unpacking device 104 comprises a knife holder 112, which is urged by means of a leaf spring 113 in the direction of the arrow 144 towards the stack 4 until a hard steel stop 115 fastened to the knife holder 112 strikes the stack 4 in order to hold a knife 116 of the knife holder 112 along the stack 4 so that the sheet 108 forming the packing is cut off the stack 4, however, without damaging the end. The knife holder 112 is adjustably fastened to a frame 118 by means of set screws 117 and fastening bolts 120 lying in elongate holes 119. The stop 115 co-operates with the roller 93 to form a bulging part 143 in which the preferably milled knife 116 can start cutting.

The rollers 92, 93 and 103 are rotatably journalled in the frame 121 comprising guide bars 122 for guiding a support 123 in the axial direction of ropes 211 to 213. An air cylinder 124 moves the support 123 in the direction of the arrow 125 to and fro. The support 123 has an arm 127 which can be turned by means of a cylinder 126 and which carries at the lower end a retaining support 128. The rope 213 is arranged centrally on the underside and the ropes 211 and 212 are arranged slightly above the middle of the stack 4 (see Fig. 12), so that the retaining support 128 can engage from above the stack 4 between the ropes 211 and 212. The ropes 211 and 212 are each guided in a rope guide 129, which is arranged with springs 130 in a U-profile. As shown in Fig. 14 these springs are leaf springs. Thus the stack 4 is stably enclosed between the ropes 211, 212 and 213.

In order to enhance the safety against falling over of the ends 3 the transport space between the ropes 211, 212, 213 is bounded on the underside by guide plates 218 which are outwardly and upwardly directed at an angle $g$ of 60° to the horizon. When ends 3 of a different diameter are treated, the two ropes 211 and 213 are displaced by displacing the associated U-profiles 131 connected with brackets 219 by means of setting means with respect to a frame 220, for example, into the positions indicated by broken lines. The setting means comprise fastening places 221 and 222 being at an angle $p$ of preferably 48°30′ to the horizon and being mutually displaceable by means of bolts 223 lying in slots in the direction of the arrows 224.

The length of the rollers 92, 93, 94 is such that stacks 4 of great and different lengths can be processed. The pusher 132 is fastened to a support 133, which is reciprocated by means of a motor 134 driving a screw spindle 135 in an axial direction of the ropes 211 to 213. As an alternative the pusher 132 may be reciprocated by means of a pneumatic cylinder, preferably a known air cylinder, the piston of which has a fastening arm extending through a longitudinal slot of the cylinder, whilst means are provided for sealing the cylinder slot.

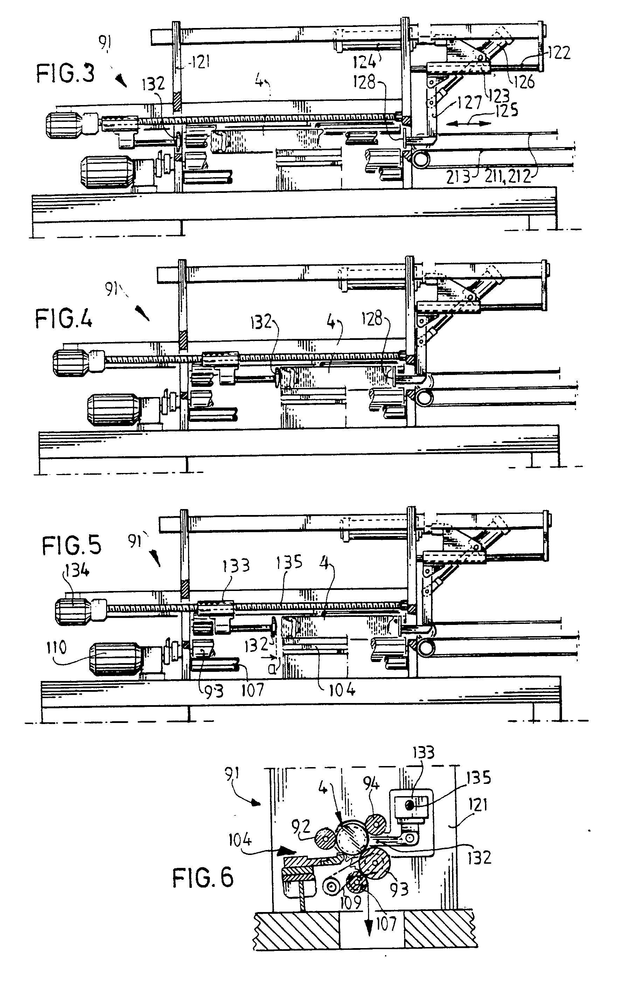

The control of the unpacking device 104 is illustrated in successive stages in Figs. 3 to 10.

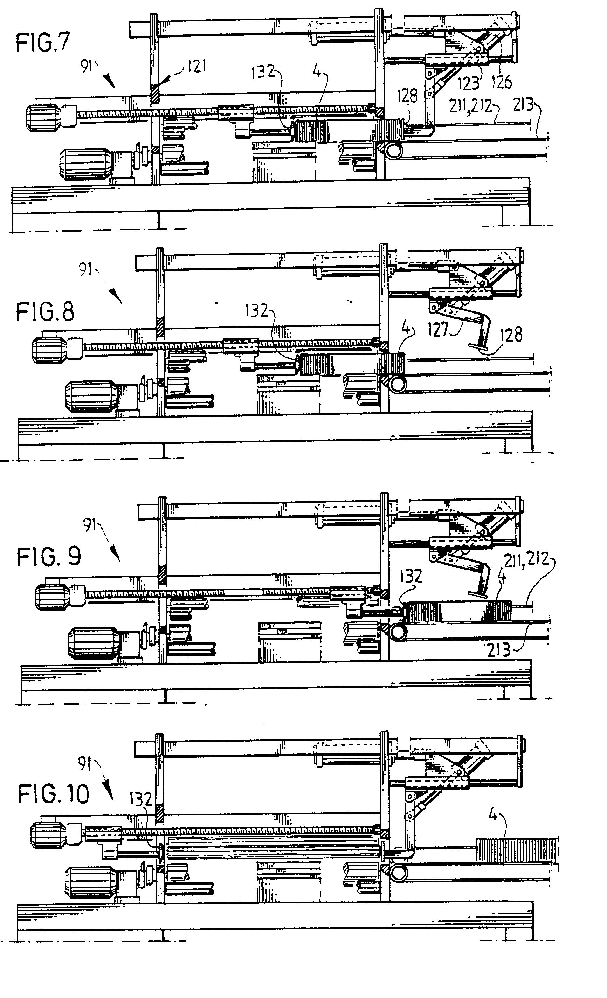

In the position shown in Fig. 9 the retaining support 128 and the pusher 132 are located at the two ends of the unpacking space and the roller 94 is in the deflected position indicated by broken lines in Fig. 1 so that a packed stack 4 can roll between the rollers 92, 93 and 94 in the direction of the arrow 136. The pusher 132 than moves into the position shown in Fig. 13 in which the packed stack 4 is urged against the retaining support 128, after which the pusher 132 is moved back over a small distance of, for example, 5 mns (Fig. 5) in order to leave some clearance at both ends of the stack 4 for releasing the sheet 108.

As shown in Fig. 6 the stack 4 is rotated by driving the rollers 92, 93 and 107, whilst the knife 116 cuts up the sheet 108 and peels it off the stack 4. The sheet 108 is conducted away between the rollers 93 and 107.

The pusher 132 and the retaining support 128 constitute together second transport means.

As shown in Fig. 7 the unpacked stack 4 is driven by the pusher 132 with the above mentioned speed v3, which exceeds the speed v2 of the ropes 211, 212, 213, which constitute third transport means, the pusher pushing in front of it the retaining support 128 together with the support 123, whilst the stack 4 is clamped tight. The air cylinder 124 then operates as a counterpressure spring. When the stack is engaged over a sufficient length between the ropes 211 to 214, so that these ropes produce sufficient counterpressure, the retaining support 128 is turned away by means of the cylinder 126 from between the ropes (Fig. 8).

Fig. 9 shows that the whole stack 4 is located between the ropes 211 and 213. Then the pusher 132 and the retaining support 128 move back to their initial positions (Fig. 10) whilst the stack 4 is further transported by the ropes 211 to 213. Then a next packed stack 4 of Fig. 3 can drop in between the rollers.

Fig. 11 shows that the ropes 211 to 213 can be commonly driven with the same speed v2 by a motor 137 having pulleys 139 mounted on a common horizontal shaft 138. The ropes 211 to 213 are all positioned in a vertical plane and passed along guide discs 140 and stretching discs 141.

## Claims

1. A device (1) for handling round, flat, substantially identical ends (3) for tins, comprising a plurality of rotatably journalled rollers (92, 93, 94) bounding an unpacking space for receiving a stack (4) of ends (3) packed in a sheet, for example of paper, said unpacking space being furthermore bounded by cutting means (116) for cutting the sheet, the sheet forming the packing being cut by said cutting means (116) and peeled from said stack whilst the stack (4) is rotated by the rollers (92, 93, 94) about its longitudinal axis, characterized by a first transport means (97) for introducing the packed stack (4) into the unpacking space in a transverse direction thereof and by second transport means (128, 132) for removing the unpacked stack (4) of ends (3) in an axial direction out of the unpacking space and for supplying the unpacked stack (4) to a third transport means (211, 212, 213) the receiving end of which extends in the axial direction of the rollers (92, 93, 94); that the second transport means (128, 132) comprises a retaining support (128) located at the end of the unpacking place near the third transport means (211, 212, 213) and a pusher (132) located at the end of the unpacking space remote from the third transport means (211, 212, 213); and that the retaining support (128) and the pusher (132) are both movable in the axial direction of the rollers (92, 93, 94) for transferring the unpacked stack (4) to the third transport means (211, 212, 213); and that the retaining support (128) is movable out of the path of the unpacked stack (4) of ends (3) for permitting it to pass.

2. A device (1) as claimed in claim 1, characterized in that the pusher (132) and the retaining support (128) are independently movable in the axial direction of the rollers (92, 93, 94) to vary the distance between them.

3. A device (1, 210) as claimed in claim 2, characterized by means for controlling the axial displacement of the pusher (132) and the retaining support (128), so that during a treatment cycle they are first largely spaced apart during a receiving phase, in which a stack (4) of ends (3) packed in a sheet is received in the unpacking space, that subsequently at the beginning of an unpacking phase they are moved away from one another a clearing distance for releasing the packing at the head ends of the stack (4), that after unpacking at the beginning of the supply phase they are moved towards one another for clamping between them the stack (4) and that subsequently they are moved towards the third transport means (211, 212, 213) together with the unpacked stack (4), whilst the distance between them remains the same.

4. A device (210) as claimed in any one of the claims 1—3, characterized by a stack supply device (91) having a stack holder (95) for stacks (4) bounded by the first transport means (97) with stack receiving spaces (100).

5. A device (210) as claimed in any one of claims 1 to 4, characterized in that the cutting means (116) comprises a knife holder (112) provided with a stop (115) bearing on the stack (4).

6. A device (210) as claimed in any one of claims 1 to 5, characterized in that the cutting means (116) comprises a knife (116) which is held in its working position by spring means.

7. A device as claimed in any one of the preceding claims, characterized in that the third transport means comprises at least one set of endless ropes, at least three, guided around driving and guide rollers and driven with equal speeds, at least the active parts of said ropes being parallel and spaced apart by distances such that these parts together are capable of resiliently retaining the ends to be transported by clamping force and thus of carrying them along their path and in that the set of ropes (211, 212, 213) is driven by driving means with an axial speed exceeding the speed with which the ends are conducted away from said set of ropes (211, 212, 213) and in that the second transport means (128, 132) are driven stepwise by control means with a frequency such that the intervals between consecutive cycles of supplies of stacks (4) are so short that each time a stack (4) of ends introduced into the set of ropes (211, 212, 213) is placed to the end of an end-snake still located in the set of ropes (211, 212, 213).

8. A device as claimed in claim 7, characterized in that the receiving space bounded by the set of ropes (211, 212, 213) is furthermore bounded by upwardly and outwardly sloping guide plates (218).

9. A device (91) as claimed in any one of claims 6 to 8, characterized in that at least one rope (211), but preferably both upper ropes (211, 212) are arranged one on each side of the centre is (are) subjected to spring action by spring means (130) urging said ropes (211, 212) inwardly.

**Patentansprüche**

1. Vorrichtung (1) zur Behandlung von runden, flachen und im wesentlichen identischen Deckeln (3) für Blechdosen, mit einem durch drehbar gelagerte Rollen (92, 93, 94) und eine Schneidvorrichtung (116) begrenzten Auspackraum, in den ein Deckelstapel (4) aufgenommen wird, dessen z.B. aus Papier bestehende Verpackungshülle durch die Schneidvorrichtung (116) aufgetrennt und, während sich die Rollen (92, 93, 94) um ihre Längsachse drehen, abgeschält wird, gekennzeichnet durch eine erste Transportvorrichtung (97) zur Beschickung des Auspackraumes mit dem verpackten Deckelstapel (4) in querliegender Richtung, eine zweite Transportvorrichtung (128, 132) zum Entfernen des ausgepackten Deckelstapels (4) in axialer Richtung aus dem Auspackraum und dessen Weitergabe an eine dritte Transportvorrichtung (211, 212, 213) mit sich in axialer Richtung der Rollen (92, 93, 94) erstreckendem Ende, wobei die zweite Transportvorrichtung (128, 132) eine Zurückhaltevorrichtung (128) nahe dem der dritten Transportvorrichtung (211, 212, 213) zugewandten Ende des Auspackraums und eine Schiebevorrichtung (132) an dem der dritten Transportvorrichtung (211, 212, 213) abgewandten Ende des Auspackraums enthält und wobei die Zurückhaltevorrichtung (128) und die Schiebevorrichtung (132) beide in axialer Richtung der Rollen (92, 93, 94) beweglich sind, un dem ausgepackten Deckelstapel (4) zur dritten Transportvorrichtung (211, 212, 213) weiterzugeben, und wobei die Zurückhaltevorrichtung (128) aus der Transportbahn des Deckelstapels (4) herausbewegbar ist, um dessen Pasieren zu ermöglichen.

2. Vorrichtung (1) nach Anspruch 1, dadurch gekennzeichnet, daß die Schiebevorrichtung (132) und die Zurückhaltevorrichtung (128) in axialer Richtung der Rollen (92, 93, 94) unabhängig voneinander beweglich sind, um den Abstand zwischen ihnen variieren zu können.

3. Vorrichtung (1, 210) nach Anspruch 2, gekennzeichnet durch eine Steuereinrichtung für die axiale Verschiebung von Schiebevorrichtung (132) und Zurückhaltevorrichtung (128) dergestalt, daß sie im Verlauf eines Arbeitszyklus während der Beschickungsphase, in der ein eingepackter Deckelstapel (4) in den Auspackraum aufgenommen wird, weit voneinander entfernt sind, daß sie anschließend zu Beginn der Auspackphase um einen Entnahmeabstand zum Entfernen des Verpackungsmaterials an den Stirnseiten des Deckelstapels (4) auseinanderbewegt werden, daß sie nach dem Auspacken zu Beginn der Ausstoßphase zum Einspannen des Deckelstapels (4) zwischen sich aufeinanderzu bewegt werden und daß sie mit dem ausgepackten Deckelstapel (4) bei gleichbleibendem Abstand voneinander in Richtung auf die dritte Transportvorrichtung (211, 212, 213) bewegt werden.

4. Vorrichtung (210) nach einem der vorgenannten Ansprüche 1 bis 3, gekennzeichnet durch eine Beschickungsvorrichtung (91) mit einem Stapelhalter (95) für Deckelstapel (4), der durch die erste Transportvorrichtung (97) mit Aufnahmeräumen (100) begrenzt wird.

5. Vorrichtung (210) nach einem der vorgenannten Ansprüche 1 bis 4, dadurch gekennzeichnet, daß die Schneidvorrichtung (116) einen Messerhalter (112) beinhaltet, der mit einem Anschlag an dem Deckelstapel (4) anliegt.

6. Vorrichtung (210) nach einem der vorgenannten Ansprüche 1 bis 5, dadurch gekennzeichnet, daß die Schneidvorrichtung (116) ein Messer (116) enthält, das durch Federn in seiner Arbeitsstellung gehalten wird.

7. Vorrichtung nach einem der vorgenannten Ansprüche, dadurch gekennzeichnet, daß die dritte Transportvorrichtung mindestens einen Satz von Endlosseilen, zumindest drei, enthält, die um Führungs- und Antriebsrollen herumgeführt und mit gleicher Geschwindigkeit angetrieben werden, wobei zumindest deren aktive Abschnitte parallel und in solch einem Abstand zueinander verlaufen, daß sie die zu transportierenden Deckel elastisch durch Spanndruck festhalten und somit entlang ihrer Wegstrecke weitertransportieren, und daß der Satz von Seilen (211, 212, 213) mittels eines Antriebs mit einer axialen Geschwindigkeit angetrieben wird, die größer ist als die Geschwindigkeit, mit der die Deckel von den Seilen (211, 212, 213) wegbewegt werden, und daß die zweite Transportvorrichtung (128, 132) schrittweise mit einer solchen Frequenz gesteuert wird, daß die Intervalle zwischen den Nachschubzyklen von Deckelstapeln (4) so kurz sind, daß jederzeit ein in den Satz von Seilen (211, 212, 213) eingeführter Deckelstapel (4) an das Ende der noch in dem Satz von Seilen (211, 212, 213) befindlichen Deckelschlange anschließt.

8. Vorrichtung nach Anspruch 7, dadurch gekennzeichnet, daß der durch die Seile (211, 212, 213) gebildete Aufnahmeraum außerdem noch durch schräge, nach oben und nach außen geneigte Führungsplatten (218) begrenzt wird.

9. Vorrichtung (91) nach einem der vorgenannten Ansprüche 6 bis 8, dadurch gekennzeichnet, daß zumindest ein Seil (211), jedoch vorzugsweise die beiden oberen, beidseitig von der Mitte angeordneten Seile (211, 212) unter Federwirkung durch Federn (130) nach innen gedrückt werden.

**Revendications**

1. Dispositif (1) pour la manutention de fonds (3) de boîtes en fer blanc circulaires, plans et sensiblement identiques entre eux, comprenant une pluralité de rouleaux (92, 93, 94) montés rotatifs et délimitant un espace de déballage destiné à recevoir une pile (4) de fonds (3) emballés dans une feuille, par exemple en papier, ledit espace de déballage étant en outre délimité par un organe de coupe (116) destiné à la coupe de·la feuille, la feuille formant emballage étant coupée par ledit organe de coupe (116) et détachée de ladite pile (4) lors de la rotation de celle-ci autour de son axe longitudinal à l'aide des rouleaux (92, 93, 94), caractérisé en ce qu'il comporte des premiers moyens (97) pour l'introduction de la pile (4) emballée dans l'espace de déballage dans une direction transversale à celui-ci, et des seconds moyens de transport (128, 132) pour l'enlèvement de la pile déballé (4) de fonds (3) dans une direction axiale hors de l'espace de déballage et pour l'amenée de la pile (4) déballée à des troisièmes moyens de transport (211, 212, 213) dans l'extrémité de réception s'étendant dans la direction axiale des rouleaux (92, 93, 94), en ce que les seconds moyens de transport (128, 132) comprennent un support de retenue (128) disposé à l'extrémité de l'espace de déballage prés des troisièmes moyens de transport (211, 212, 213) et un poussoir (132) disposé à l'extrémité de l'espace de déballage éloignée des troisièmes moyens de transport (211, 212, 213), et en ce que le support de retenue (128) et le poussoir (132) sont tous les deux déplaçables dans la direction axiale des rouleaux (92, 93, 94) pour le transfert de la pile (4) déballée vers les troisièmes moyens de transport (211, 212, 213), et en ce que le support de retenue (128) est déplaçable hors du trajet de la pile (4) déballée de fonds (3) afin de permettre le passage de celle-ci.

2. Dispositif (1) selon la revendication 1, caractérisé en cè que le poussoir (132) et le support de retenue (128) sont déplaçables l'un indépendamment de l'autre dans la direction axiale des rouleaux (92, 93, 94) de manière à faire varier la distance entre eux.

3. Dispositif (1, 210) suivant la revendication 2, caractérisé en ce qu'il comporte des moyens de commande du déplacement axial du poussoir (132) et du support de retenue (128) de sorte que, lors d'un cycle de traitement, ceux-ci soient d'abord largement espacés l'un par rapport à l'autre pendant une phase de réception dans laquelle une pile (4) de fonds (3) emballée dans · une feuille est reçue dans l'espace de déballage, qu'ultérieurement au début de la phase de déballage ils sont éloignés les uns des autres par une distance de dégagement afin de dégager l'emballage à l'endroit des fonds d'extrémité de la pile (4), qu'après le déballage au début de la phase d'amenée, ils sont déplacés l'un vers l'autre afin de serrer entre eux la pile (4) et qu'ultérieurement ils sont déplacés vers les troisièmes moyens de transport (211, 212, 213) ensemble avec la pile (4) déballée, la distance entre les rouleaux restant la même.

4. Dispositif (210) suivant l'une quelconque des revendications 1, à 3, caractérisé en ce qu'il comporte un dispositif d'amenée de piles (91) pourvu d'un support de piles (95) pour les piles (4) limité par les premiers moyens de transport (97) ayant des espaces de réception (100) de piles.

5. Dispositif (210) suivant l'une quelconque des revendications 1 à 4, caractérisé en ce que l'organe de coupe (116) comprend un support de couteau (112) pourvu d'une butée (115) en appui contre la pile (4).

6. Dispositif (210) suivant l'une quelconque des revendications 1 à 5, caractérisé en ce que l'organe de coupe (116) comporte un couteau (116) qui est maintenu dans sa position de travail par des moyens élastiques.

7. Dispositif suivant l'une quelconque des revendications précédentes, caractérisé en ce que les troisièmes moyens de transport comprennent au moins un jeu de câbles sans fin, d'au moins trois câbles, guidés autour de rouleaux d'entraînement et de guidage et entraînes à une vitesse égale, au moins les parties actives desdits câbles étant parallèles et espacées par des distances telles que ces parties soient ensemble capables de retenir par une force de serrage de ·manière élastique les fonds à transporter et ainsi emporter les fonds le long de leur trajet, et en ce que le jeu de câbles (211, 212, 213) est entraîne par des moyens d'entraînement ayant une vitesse axiale supérieure à la vitesse à laquelle les fonds sont emportés à partir dudit jeu de câbles (211, 212, 213) et en ce que les seconds moyens de transport (128, 132) sont entraînes par étapes à l'aide de moyens de commande ayant une fréquence telle que les intervalles entre des cycles successifs d'amenées de piles (4) soient si courts qu'à chaque fois une pile (4) de fonds introduite dans le jeu de câbles (211, 212, 213) soit disposée à l'extrémité d'un serpent de fonds toujours disposé dans le jeu de câbles (211, 212, 213).

8. Dispositif suivant la revendication 7, caractérisé en ce que l'espace de réception délimité par le jeu de câbles (211, 212, 213) est en outre délimité par des plaques de guidage (218) inclinées vers le haut et vers l'extérieur.

9. Dispositif (91) suivant l'une quelconque des revendications 6 à 8, caractérisé en ce qu'au moins un câble (211), mais de préférence les deux câbles supérieurs (211, 212) disposés d'un côté et de l'autre du centre, est (sont) soumis à une action de ressort par des moyens de ressort (130) sollicitant lesdits câbles (211, 212) vers l'intérieur.

FIG.1

FIG. 2

FIG.3

FIG.4

FIG.5

FIG.6

FIG.7

FIG.8

FIG. 9

FIG. 10

FIG. 11

FIG.12

FIG.13

FIG. 14